# EUROPÄISCHE PATENTSCHRIFT

(11) **EP 2 810 399 B1**
(45) Veröffentlichungstag und Bekanntmachung des Hinweises auf die Patenterteilung: **10.03.2021**
(21) Anmeldenummer: 13700896.7
(22) Anmeldetag: 17.01.2013
(51) Int. Cl.: H04L 7/04, H04L 25/03, H04L 12/40, B60R 21/01

(54) **EMPFANGSANORDNUNG FÜR EIN STEUERGERÄT IN EINEM FAHRZEUG UND VERFAHREN ZUM ERZEUGEN EINES SYNCHRONISATIONSPULSES**
RECEIVNG DEVICE FOR A CONTROL DEVICE IN A VEHICLE ET METHOD FOR GENERATING A SYNCHRONISATION PULSE
DISPOSITIF DE RECEPTION POUR UN DISPOSITIF DE CONTROLE DANS UN VÉHICULE ET PROCÉDÉ DE GENERATION D'UNE IMPULSION DE SYNCHRONISATION

(30) Priorität: 03.02.2012 DE 102012201596
(43) Veröffentlichungstag der Anmeldung: 10.12.2014
(73) Patentinhaber: Robert Bosch GmbH, 70442 Stuttgart (DE)
(72) Erfinder: WEISS, Timo, 71701 Schwieberdingen (DE); SIEMSS, Matthias, 72810 Gomaringen (DE); WEISS, Guenter, 74399 Walheim (DE); MOMENI, Massoud, 72762 Reutlingen (DE)
(86) Internationale Anmeldenummer: PCT/EP2013/050828
(87) Internationale Veröffentlichungsnummer: WO 2013/113570

(56) Entgegenhaltungen:
- EP-A2- 0 959 595
- DE-A1-102009 001 370
- US-A- 5 408 497
- US-A1- 2003 001 618

## Beschreibung

### Stand der Technik

Die Erfindung geht aus von einer Empfangsanordnung für ein Steuergerät in einem Fahrzeug nach der Gattung des unabhängigen Patentanspruchs 1 und von einem zugehörigen Verfahren zum Erzeugen eines Synchronisationspulses nach der Gattung des unabhängigen Patentanspruchs 8.

Zur Übertragung von Sensordaten an ein zentrales Steuergerät (ECU) in einem Fahrzeug nutzen periphere Sensoren für Insassenschutzsysteme meist Stromschnittstellen (z.B. PAS4, PSI5). Bei Stromschnittstellen der neuesten Generation (PSI5) wird mittels Synchronisierung der Busbetrieb mit mehreren Sensoren an einem Empfänger ermöglicht. Für die Funktion der Synchronisierung wird vom zentralen Steuergerät (ECU) ein Arbeitstakt in Form eines Spannungspulses erzeugt, welcher von den Sensoren am Bus detektiert wird und den Beginn eines neuen Zyklus für die Datenübertragung kennzeichnet. Dieser Spannungspuls wird als Synchronisationspuls bezeichnet und entsteht mit Hilfe von Stromquellen und Stromsenken, welche die Buslast auf- bzw. entladen. Typischerweise wird dieser Spannungspuls alle 500 µs wiederholt.

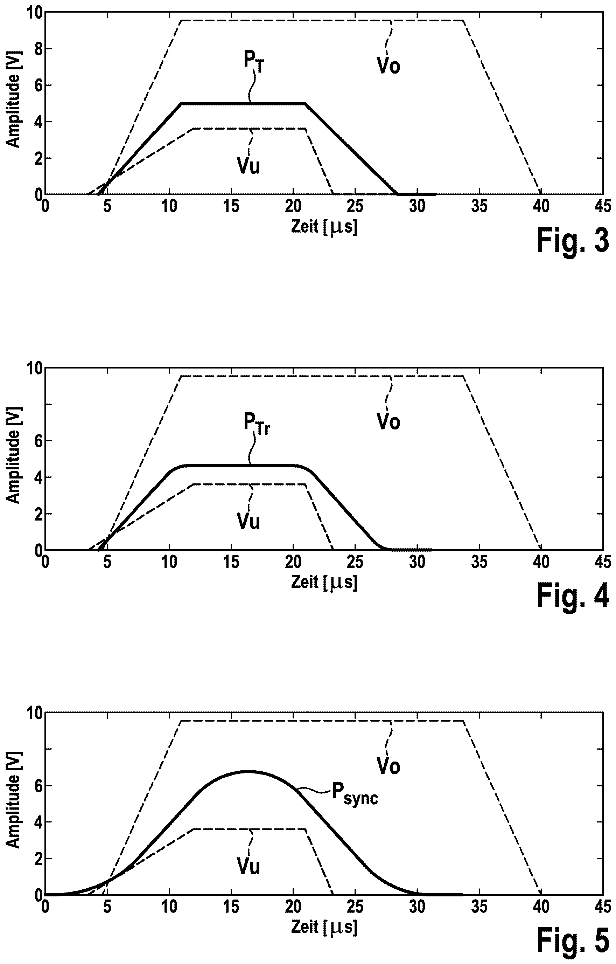

Damit ein synchrones Bussystem mit einem Sensor oder mehreren Sensoren funktioniert, ist es wichtig, dass der Synchronisationspuls für alle möglichen Buskonfigurationen und unter allen möglichen Betriebsbedingungen eine bestimmte Form und ein bestimmtes zeitliches Verhalten aufweist. Daher wird bei bekannten synchronen Bussystemen in der Regel ein in Fig. 3 dargestellter trapezförmiger Synchronisationspuls P_{T} mit einer vorgegebenen Flankensteilheit verwendet. Hierbei liegt die Flankensteilheit zwischen einer Flankensteilheit einer ersten Kennlinie, welche eine untere Grenze Vu repräsentiert, und einer Flankensteileinheit einer zweiten Kennlinie, welche eine obere Grenze Vo repräsentiert. Während des synchronen Busbetriebs führt die Trapezform des Synchronisationspulses P_{T} durch den hohen Oberwellenanteil zu verstärkter elektromagnetischer Abstrahlung (EMV) im Frequenzspektrum der Signalübertragung. Dem kann in gewissem Maße beispielsweise durch einen in Fig. 4 dargestellten Synchronisationspuls P_{Tr} entgegengewirkt werden, welcher eine Trapezform mit vier abgerundeten Ecken aufweist.

In der Offenlegungsschrift DE 10 2009 001 370 A1 werden eine Empfangseinrichtung zum Aufnehmen von Stromsignalen, eine Schaltungsanordnung mit einer solchen Empfangseinrichtung und ein Verfahren zum Übertragen von Stromsignalen über ein Bussystem beschrieben. Die beschriebene Empfangseinrichtung umfasst zum Aufnehmen von Stromsignalen mehrerer Sender mindestens zwei Busanschlusseinrichtungen, wobei jede Busanschlusseinrichtung zum Anschluss an jeweils mindestens eine Busverbindung ausgebildet ist, und eine Steuereinrichtung zur Ausgabe von Synchronisationspulsen an die Busanschlusseinrichtungen zur Synchronisierung der Sender. Die Busanschlusseinrichtungen geben die Synchronisationspulse mit mindestens einem Zeitversatz zueinander an die mehreren Sender aus, wobei die Synchronisationspulse jeweils eine Trapezform mit abgerundeten Ecken ausweisen.

Aus der EP 0 959 595 A2 ist eine Sendeenrichtung und ein Bussystem zum seriellen Datentransfer von binären Daten zwischen mindestens zwei Kommunikationsstationen bekannt, die über eine einzelne Busleitung miteinander gekoppelt sind. Die Sendeeinrichtung einer Kommunikationsstation weist eine Schaltung zur Kurvenformeinstellung auf. Schaltung zur Kurvenformeinstellung erzeugt aus einem zu sendenden Datensignal ein Ausgangssignal mit möglichst sinushalbwellenförmigen Signalflanken.

Aus der US 5,408,497 ist eine Transceiverschaltung bekannt, welche Daten als stufige sinusförmige Signalwelle über eine verdrillte Zweidrahtleitung empfängt.

### Offenbarung der Erfindung

Die erfindungsgemäße Empfangsanordnung für ein Steuergerät in einem Fahrzeug mit den Merkmalen des unabhängigen Patentanspruchs 1 und das erfindungsgemäße Verfahren zum Erzeugen eines Synchronisationspulses mit den Merkmalen des unabhängigen Patentanspruchs 8 haben demgegenüber den Vorteil, dass durch die sinusförmige Ausbildung des Synchronisationspulses in den vorgegebenen Grenzen eine möglichst geringe elektromagnetische Abstrahlung, insbesondere im Spektralbereich der Signalübertragung (100kHz bis 300kHz), erreicht werden kann.

Der Kern und Vorteil der Erfindung besteht darin, nicht nur die Ecken des Synchronisationspulses abzurunden, sondern die ganze Form derart zu optimieren, dass die elektromagnetische Abstrahlung möglichst auf den Bereich der Grundwellen des Synchronisationspulses beschränkt bleibt.

Ausführungsformen der vorliegenden Erfindung stellen eine Empfangsanordnung für ein Steuergerät in einem Fahrzeug zur Verfügung, welche einen Spannungsgenerator zur Erzeugung eines Synchronisationspulses aufweist, welcher eine erste Spannungsquelle, eine Stromquelle und eine Stromsenke umfasst. Der Spannungsgenerator erzeugt den Synchronisationspuls innerhalb von vorgegebenen Spezifikationsgrenzen mit einer vorgegebenen Form und einem vorgegebenen zeitlichen Verhalten, und die Empfangsanordnung gibt den Synchronisationspuls zur Synchronisierung einer Signalübertragung über einen Datenbus an mindestens einen Sensor aus. Erfindungsgemäß erzeugt der Spannungsgenerator den Synchronisationspuls über die Stromquelle und die Stromsenke durch Aufladen und/oder Entladen einer Buslast im Wesentlichen als Sinusschwingung. Hierbei kann die Stromquelle beispielsweise Stromwerte bereitstellen, welche größer oder gleich 0mA sind, und die Stromsenke kann beispielsweise Stromwerte bereitstellen, welche kleiner als 0mA sind.

Zudem wird ein Verfahren zum Erzeugen eines Synchronisationspulses zur Synchronisierung einer nachfolgenden Signalübertragung zwischen einer Empfangsanordnung und mindestens einem Sensor über einen Datenbus in einem Fahrzeug vorgeschlagen. Der Synchronisationspuls wird innerhalb von vorgegebenen Spezifikationsgrenzen mit einer vorgegebenen Form und einem vorgegebenen zeitlichen Verhalten erzeugt und von der Empfängeranordnung an den mindestens einen Sensor übertragen. Erfindungsgemäß wird der Synchronisationspuls im Wesentlichen als Sinusschwingung erzeugt.

Der Synchronisationspuls kann vorzugsweise vor bzw. zu Beginn der Signalübertragung zwischen dem mindestens einen Sensor und der Empfängeranordnung von der Empfangsanordnung an den mindestens einen Sensor übertragen werden.

Durch die in den abhängigen Ansprüchen aufgeführten Maßnahmen und Weiterbildungen sind vorteilhafte Verbesserungen der im unabhängigen Patentanspruch 1 angegebenen Empfangsanordnung für ein Steuergerät in einem Fahrzeug möglich.

Gemäss der Erfindung umfasst der Spannungsgenerator mindestens eine digitale Ansteuerschaltung und mindestens einen Digital-Analog-Wandler umfasst, welche einen im Wesentlichen sinusförmigen Referenzstrom erzeugen und an die Stromquelle und die Stromsenke ausgeben.

In vorteilhafter Ausgestaltung der erfindungsgemäßen Empfangsanordnung können eine erste digitale Ansteuerschaltung und ein erster Digital-Analog-Wandler einen im Wesentlichen sinusförmigen Referenzstrom erzeugen und an die Stromquelle ausgeben. Eine zweite digitale Ansteuerschaltung und ein zweiter Digital-Analog-Wandler können ebenfalls einen im Wesentlichen sinusförmigen Referenzstrom erzeugen und an die Stromsenke ausgeben. Dies ermöglicht in vorteilhafter Weise eine sehr robuste Realisierung des Synchronisationspulses und eine reduzierte elektromagnetische Abstrahlung. Hinzu kommt, dass die Ansteuerung des Synchronisationspulses vollständig in den Digitalteil der Schaltung ausgelagert werden kann, was aufgrund der immer fortschrittlicheren Skalierung der Halbleitertechnologie zu einer flächeneffizienten Lösung führen kann. Eine Spannungsversorgung des Empfängers kann während des Synchronisationspulses vom Datenbus abgekoppelt werden, während der Spannungsgenerator zur Erzeugung des Synchronisationspulses aktiviert wird. Da der Spannungsgenerator zur Erzeugung des Synchronisationspulses eine Stromquelle und eine Stromsenke umfasst, kann die Notwendigkeit für einen zusätzlichen Schalter in Serie mit der Stromquelle und der Stromsenke entfallen.

In weiterer vorteilhafter Ausgestaltung der erfindungsgemäßen Empfangsanordnung können eine gemeinsame digitale Ansteuerschaltung und ein gemeinsamer Digital-Analog-Wandler einen im Wesentlichen sinusförmigen Referenzstrom erzeugen und an die Stromquelle und die Stromsenke ausgeben. Durch eine gemeinsame Nutzung der digitalen Ansteuerschaltung und des Digital-Analog-Wandlers kann die Anzahl der Bauteile des Spannungsgenerators reduziert und Layoutfläche eingespart werden.

Die Form des Synchronisationspulses kann entweder im Digitalteil bzw. in der digitalen Ansteuerschaltung hinterlegt oder mit Hilfe eines Algorithmus berechnet werden. Der Digital-Analog-Wandler erzeugt aus einem N-Bit Datenwort einen Referenzstrom, welcher über die Stromquelle bzw. Stromsenke auf den Datenbus geleitet wird und die am Datenbus anliegende Last auflädt bzw. entlädt. Um einen im Wesentlichen sinusförmigen Synchronisationspuls, d.h. einen sinusförmigen oder einen annähernd sinusförmigen Synchronisationspuls, zu erzeugen, wird sowohl die Stromquelle als auch die Stromsenke sinusförmig oder annähernd sinusförmig angesteuert. Die Auflösung des Datenworts kann aus Abstrahlgründen derart gewählt werden, dass der Synchronisationspuls ohne signifikante Sprünge abgebildet werden kann. Die Kapazität der Buslast integriert den Busstrom und glättet auf diese Weise die Spannung auf dem Datenbus.

Die erfindungsgemässe Empfangsanordnung kann die mindestens eine digitale Ansteuerschaltung den Synchronisationspuls basierend auf dem Ruhestrom und der Buslast regeln, wobei die Ruhestromregelung ein Maß für den Ruhestrom und eine erreichte Synchronisationspulsamplitude ein Maß für die Buslast liefert. Die Synchronisationspulsamplitude kann durch eine Bewertung der Busspannung ermittelt werden. Die Information über die erreichte Synchronisationspulsamplitude wird über die Bewertung der Busspannung gewonnen. Die Kenntnis des Ruhestroms ist erforderlich, um beim Start des Synchronisationspulses eine korrekte Übernahme des Ruhestroms durch die Stromquellen des Spannungsgenerators zu gewährleisten. Zur Bewertung der Busspannung wird eine Entscheidungsschwelle definiert und innerhalb eines definierten Zeitfensters, beispielsweise von einem Komparator überwacht. Die mindestens eine digitale Ansteuerschaltung erkennt eine zu hohe Synchronisationspulsamplitude, wenn der Synchronisationspuls die Entscheidungsschwelle zu einem Zeitpunkt erreicht, welcher vor dem Zeitfenster liegt. Die mindestens eine digitale Ansteuerschaltung erkennt eine zu niedrige Synchronisationspulsamplitude, wenn der Synchronisationspuls die Entscheidungsschwelle während einer Periodendauer des Synchronisationspulses nicht erreicht. Die mindestens eine digitale Ansteuerschaltung erkennt eine korrekte Synchronisationspulsamplitude, wenn der Synchronisationspuls die Entscheidungsschwelle zu einem Zeitpunkt erreicht, welcher innerhalb des Zeitfensters liegt. Prinzipiell lässt sich die Bewertung der Synchronisationspulsamplitude an einer beliebigen Stelle des Synchronisationspulses durchführen, beispielsweise auch entlang der steigenden oder fallenden Flanke. Allerdings sind die geringsten Toleranzen und damit die zuverlässigste Regelung in der Umgebung des Maximums der Pulsspannung zu erwarten, da die Spannung hier den kleinsten Änderungen unterliegt. Die Dauer des Synchronisationspulses wird konstant gehalten, während die Stufenhöhen des vom Digital-Analog-Wandler ausgegebenen Referenzstromes entsprechend der Information aus der Amplitudenbewertung skaliert werden können. Die Stufenhöhe kann beispielsweise aus der Multiplikation der minimal möglichen Stufenhöhe mit einem Skalierungsfaktor berechnet werden. Die minimale Stufenhöhe ergibt sich aus dem minimalen Strom aus der Stromquelle bzw. Stromsenke. Der Skalierungsfaktor wird bei einem zu niedrigen Synchronisationspuls vergrößert und bei einem zu hohen Synchronisationspuls verkleinert, bis die richtige Höhe erreicht wird und die Entscheidungsschwelle innerhalb des Zeitfensters überschritten wird.

Ausführungsbeispiele der Erfindung sind in den Zeichnungen dargestellt und werden in der nachfolgenden Beschreibung näher erläutert. In den Zeichnungen bezeichnen gleiche Bezugszeichen Komponenten bzw. Elemente, die gleiche bzw. analoge Funktionen ausführen.

### Kurze Beschreibung der Zeichnungen

Fig. 1 zeigt ein schematisches Blockdiagramm einer Sensoranordnung mit einem ersten Ausführungsbeispiel einer erfindungsgemäßen Empfängeranordnung für ein Steuergerät in einem Fahrzeug, welche einen optimierten Synchronisationspuls erzeugt und ausgibt.
Fig. 2 zeigt ein schematisches Blockdiagramm einer Sensoranordnung mit einem zweiten Ausführungsbeispiel einer erfindungsgemäßen Empfängeranordnung für ein Steuergerät in einem Fahrzeug, welche einen optimierten Synchronisationspuls erzeugt und ausgibt.
Fig. 3 zeigt eine schematische Darstellung der Form und des zeitlichen Verhaltens eines herkömmlichen trapezförmigen Synchronisationspulses innerhalb von vorgegebenen Grenzen.
Fig. 4 zeigt eine schematische Darstellung der Form und des zeitlichen Verhaltens eines herkömmlichen abgerundeten trapezförmigen Synchronisationspulses innerhalb der vorgegebenen Grenzen.
Fig. 5 zeigt eine schematische Darstellung der Form und des zeitlichen Verhaltens eines erfindungsgemäß optimierten Synchronisationspulses innerhalb der vorgegebenen Grenzen.
Fig. 6 zeigt eine schematische Darstellung der Busspannung während eines erfindungsgemäß optimierten Synchronisationspulses.
Fig. 7 zeigt eine erste schematische Darstellung des Busstroms während eines erfindungsgemäß optimierten Synchronisationspulses.
Fig. 8 zeigt eine schematische Darstellung des Prinzips der Regelung der Synchronisationspulsamplitude mit drei Synchronisationspulsen mit unterschiedlichen Amplituden, von denen nur die mittlere Kurve innerhalb der spezifizierten Grenzen liegt.
Fig. 9 zeigt eine zweite schematische Darstellung des Busstroms während eines erfindungsgemäß optimierten Synchronisationspulses.

### Ausführungsformen der Erfindung

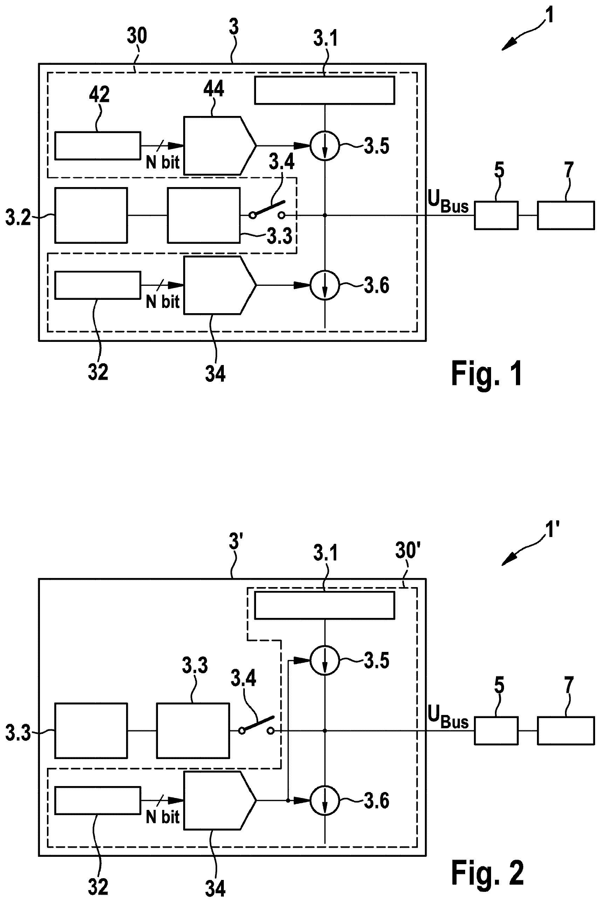

Wie aus Fig. 1 und 2 ersichtlich ist, umfassen die dargestellten Sensoranordnungen 1,1' einen Datenbus 5, mindestens einen Sensor 7 und jeweils ein Ausführungsbeispiel einer erfindungsgemäßen Empfangsanordnung 3, 3' für ein Steuergerät in einem Fahrzeug. Die erfindungsgemäßen Empfangsanordnungen 3, 3' umfassen jeweils einen Spannungsgenerator 30, 30' zur Erzeugung eines Synchronisationspulses P_{sync} mit einer ersten Spannungsquelle 3.1, einer Stromquelle 3.5 und einer Stromsenke 3.6. Erfindungsgemäß erzeugt der Spannungsgenerator 30, 30' den Synchronisationspuls P_{sync} über die Stromquelle 3.5 und die Stromsenke 3.6 durch Aufladen und/oder Entladen einer Buslast im Wesentlichen als Sinusschwingung.

Wie aus Fig. 5 ersichtlich ist, erzeugt der Spannungsgenerator 30, 30' den Synchronisationspuls P_{sync} innerhalb von vorgegebenen Spezifikationsgrenzen Vo, Vu mit einer vorgegebenen Form und einem vorgegebenen zeitlichen Verhalten. Die Empfangsanordnung 3, 3' gibt den Synchronisationspuls P_{sync} zur Synchronisierung einer nachfolgenden Signalübertragung über einen Datenbus 5 an mindestens einen Sensor 7 aus. Damit ein synchrones Bussystem mit einem Sensor 7 oder mehreren Sensoren funktioniert, weist der dargestellte Synchronisationspuls P_{sync} für alle möglichen Buskonfigurationen und unter allen möglichen Betriebsbedingungen eine bestimmte Form und ein bestimmtes zeitliches Verhalten auf. Wie aus Fig. 5 weiter ersichtlich ist, weist der Synchronisationspuls P_{sync} eine Flankensteilheit auf, welche durch die Flankensteilheit einer ersten Kennlinie, welche die untere Grenze Vu repräsentiert, und die Flankensteilheit einer zweiten Kennlinie, welche die obere Grenze Vo repräsentiert, vorgegeben wird. Durch die Sinusform oder die sinusähnliche Form ist der Synchronisationspuls P_{sync} in den vorgegebenen Grenzen Vu, Vo derart optimiert, dass eine möglichst geringe elektromagnetische Abstrahlung, insbesondere im Spektralbereich der Signalübertragung (100kHz bis 300kHz) erreicht werden kann, welche auf den Bereich der Grundwellen des Synchronisationspulses P_{sync} beschränkt bleibt.

Wie aus Fig. 1 und 2 weiter ersichtlich ist, umfasst der Spannungsgenerator 30, 30' mindestens eine digitale Ansteuerschaltung 32, 42 und mindestens einen Digital-Analog-Wandler 34, 44, welche einen im Wesentlichen sinusförmigen Referenzstrom erzeugen und an die Stromquelle 3.5 und die Stromsenke 3.6 ausgeben. Die dargestellten Ausführungsbeispiele ermöglichen eine sehr robuste Realisierung des Synchronisationspulses P_{sync} und eine reduzierte elektromagnetischen Abstrahlung. Zudem kann die Ansteuerung der Stromquelle 3.5 und der Stromsenke 3.6 zur Erzeugung des Synchronisationspulses P_{sync} vollständig in den Digitalteil der Empfangsanordnung 3, 3' ausgelagert werden, was aufgrund der immer fortschrittlicheren Skalierung der Halbleitertechnologie zu einer flächeneffizienten Lösung führt.

Wie aus Fig. 1 und 2 weiter ersichtlich ist, wird eine Spannungsversorgung 3.2 der restlichen Schaltkreise 3.3 der Empfangsanordnung 3, 3' während der Erzeugung und Ausgabe des Synchronisationspulses P_{sync} über eine Schalteinheit 3.4 vom Datenbus 5 abgekoppelt, während der Spannungsgenerator 30, 30' zur Erzeugung des Synchronisationspulses P_{sync} aktiviert wird. Da der Spannungsgenerator 30, 30' die Stromquelle 3.5 und die Stromsenke 3.6 umfasst, entfällt die Notwendigkeit für einen zusätzlichen Schalter in Serie mit der Stromquelle 3.5 und der Stromsenke 3.6.

Wie aus Fig. 1 weiter ersichtlich ist, umfasst das dargestellte erste Ausführungsbeispiel der erfindungsgemäßen Empfangsanordnung 3 einen ersten Spannungsgenerator 30, welcher eine erste digitale Ansteuerschaltung 42 und einen ersten Digital-Analog-Wandler 44, welche einen im Wesentlichen sinusförmigen Referenzstrom erzeugen und an die Stromquelle 3.5 ausgeben, und eine zweite digitale Ansteuerschaltung 32 und einen zweiten Digital-Analog-Wandler 34 umfasst, welche einen im Wesentlichen sinusförmigen Referenzstrom erzeugen und an die Stromsenke 3.6 ausgeben.

Wie aus Fig. 2 weiter ersichtlich ist, umfasst das dargestellte zweite Ausführungsbeispiel der erfindungsgemäßen Empfangsanordnung 3' einen zweiten Spannungsgenerator 30', welcher eine gemeinsame digitale Ansteuerschaltung 32 und einen gemeinsamen Digital-Analog-Wandler 34 umfasst, welche einen im Wesentlichen sinusförmigen Referenzstrom erzeugen und an die Stromquelle 3.5 und die Stromsenke 3.6 ausgeben. Durch die gemeinsame Nutzung der digitalen Ansteuerschaltung 32 und des Digital-Analog-Wandlers 34 für die Stromquelle 3.5 und die Stromsenke 3.6 lässt sich die Anzahl der Bauelemente des Spannungsgenerators 30 aus Fig. 1 reduzieren. Dadurch spart der Spannungsgenerator 30' aus Fig. 1 im Vergleich zum Spannungsgenerator 30 aus Fig. 1 Layoutfläche bzw. Siliziumfläche ein.

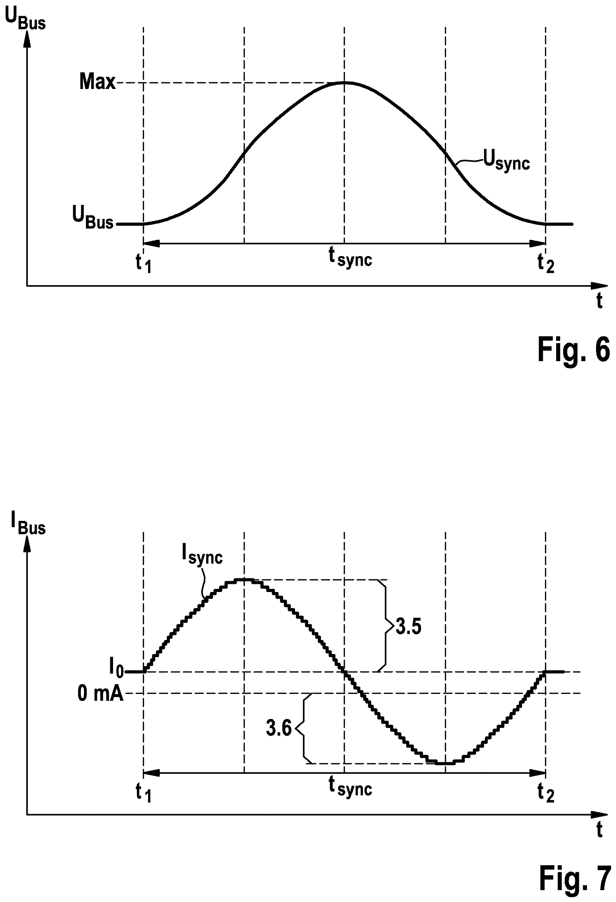

Die Form des Synchronisationspulses P_{sync} ist entweder im Digitalteil bzw. in der digitalen Ansteuerschaltung 32, 42 hinterlegt oder wird im Digitalteil bzw. in der digitalen Ansteuerschaltung 32, 42 mit Hilfe eines Algorithmus berechnet. Mindestens ein Digital-Analog-Wandler 34, 44 erzeugt aus dem N-Bit Datenwort einen Referenzstrom, welcher über die Stromquelle 3.5 bzw. Stromsenke 3.6 auf den Datenbus geleitet wird und die am Datenbus anliegende Last auf- bzw. entlädt. Um einen sinusförmigen oder annähernd sinusförmigen Synchronisationspuls P_{sync} aus Fig. 5 zu erzeugen, werden sowohl die Stromquelle 3.5 als auch die Stromsenke 3.6 sinusförmig oder annähernd sinusförmig angesteuert. Fig. 6 und 7 skizzieren die prinzipielle Ablaufsteuerung zur Erzeugung des Synchronisationspulses P_{sync}, wobei Fig. 6 einen Spannungspuls U_{sync} und Fig. 7 einen korrespondierenden Strompuls I_{sync} zeigt. Im Startpunkt t₁ des Synchronisationspulses P_{sync} stellt die Stromquelle 3.5 einen Ruhestrom I₀ aus der Spannungsversorgung 3.2 der Empfangsanordnung 3, 3' bereit. Die Information über den Ruhestrom I₀ erhält die Stromquelle 3.5 aus einer aus dem Stand der Technik bekannten Ruhestromnachregelung. Im ersten Wendepunkt des Spannungspulses U_{sync} fließt der größte Strom I_{sync} aus der Stromquelle 3.5 und im Maximum Max des Spannungspulses U_{sync} fließt wiederum lediglich der Ruhestrom I₀ aus der Stromquelle 3.5. Um die fallende Flanke des Synchronisationspulses P_{sync} zu implementieren, wird nach Erreichen des Spannungsmaximums Max der Strom I_{sync} durch die Stromquelle 3.5 reduziert, bis er schließlich zu Null wird und die Stromsenke 3.6 einen Entladevorgang startet. Im zweiten Wendepunkt des Spannungspulses U_{sync} fließt dann der größte Strom I_{sync} in die Stromsenke 3.6 und nimmt dann wieder ab, bis erneut die Stromquelle 3.5 eingreift und in der letzten Phase des Synchronisationspulses P_{sync} bis zum Endzeitpunkt t₂ den Strom I_{sync} liefert. Zum Endzeitpunkt t₂ wird der Ruhestrom wiederum aus der Spannungsversorgung 3.2 der Empfangsanordnung 3, 3' übernommen. Somit stellt die Stromquelle 3.5 während der Dauer t_{sync} des Synchronisationspulses P_{sync} Stromwerte bereit, welche größer oder gleich 0mA sind, und die Stromsenke 3.6 stellt Stromwerte bereit, welche kleiner als 0mA sind.

Die Auflösung des Datenworts ist aus Abstrahlgründen so gewählt, dass der Synchronisationspuls P_{sync} ohne signifikante Sprünge abgebildet werden kann. Die Kapazität der Buslast integriert den Busstrom I_{Bus} und glättet auf diese Weise die Spannung U_{Bus} auf dem Datenbus 5. Die Buslast kann abhängig vom Busbetrieb stark variieren und macht eine gewisse Treiberfähigkeit der Stromquelle 3.5 und der Stromsenke 3.6 erforderlich. Das bedeutet, dass die Stromquelle 3.5 und die Stromsenke 3.6 in der Lage sind, einen ausreichend hohen Strom bereitzustellen bzw. aufzunehmen, um die gewünschte Form des Synchronisationspulses P_{sync} ohne Signaleinbrüche und Signalverformungen zu ermöglichen. Diese Treiberfähigkeit ist eine wichtige Einflussgröße bei der Wahl einer angemessenen Auflösung des Digital-Analog-Wandlers 34, 44.

Wie aus Fig. 5 ersichtlich ist, werden Anforderungen an die Form und Flankensteilheit des Synchronisationspulses P_{sync} gestellt. Zum einen darf die Flankensteilheit nicht zu gering sein, da dies höhere Toleranzen der Erkennungszeit der Sensoren 7 zur Folge hat. Dies wiederum kann die maximale Anzahl an Sensoren 7 beschränken und somit den Datendurchsatz reduzieren. Zum anderen darf die Flankensteilheit nicht zu hoch sein, da dies zu verstärkter elektromagnetischer Abstrahlung führt. Zwei Größen, welche das Verhalten des Synchronisationspulses P_{sync} stark beeinflussen, sind die Buslast und der Ruhestrom I₀ des Sensors 7 bzw. der Sensoren. Verschiedene Bus- und Sensorkonfigurationen weisen stark unterschiedliche Lasten und Ruheströme I₀ auf. Um trotz dieser starken Buslast- und Ruhestromvariationen einen Synchronisationspuls P_{sync} innerhalb der vorgegebenen Grenzen Vu, Vo darstellen zu können, wird eine Regelung des Busstroms I_{Bus} bzw. der Busspannung U_{Bus} durchgeführt.

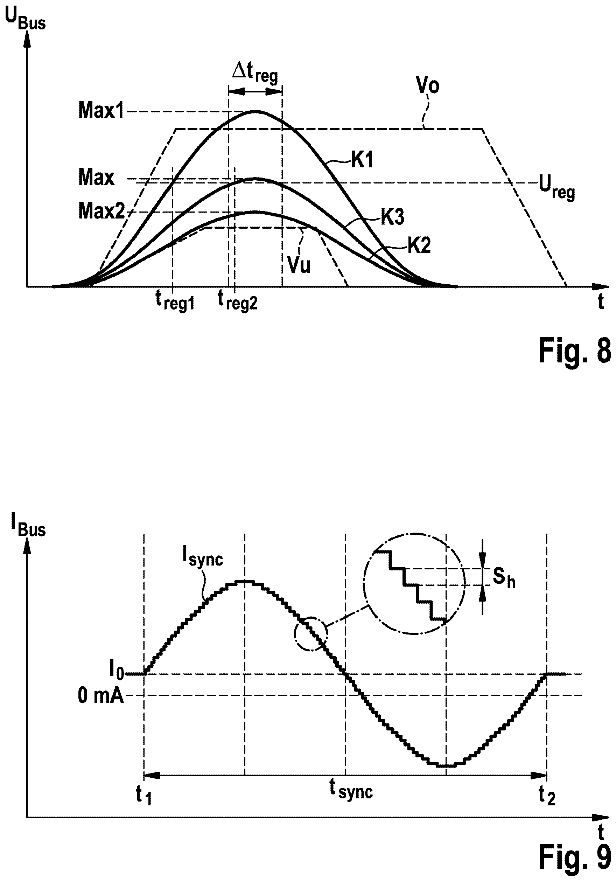

Die digitale Ansteuerschaltung 32, 42 verwendet die Information über den Ruhestrom I₀ aus der Ruhestromnachregelung und die Information über die erreichte Synchronisationspulsamplitude Max zur Regelung des Synchronisationspulses P_{sync}. Die Kenntnis des Ruhestroms I₀ ist notwendig, um beim Start des Synchronisationspulses P_{sync} eine korrekte Übernahme des Ruhestroms I₀ durch die Stromquelle 3.5 des Spannungssynchronisationspulsgenerators zu gewährleisten. Als Synchronisationspulsgenerator wird der Spannungsgenerator 30, 30' bezeichnet, welcher den Synchronisationspuls P_{sync} erzeugt und die mindestens eine digitale Ansteuerung 32, 42, den mindestens einen Digital-Analog-Wandler 34, 44, die Stromquelle 3.5, die Stromsenke 3.6 und die Spannungsversorgung 3.1 für die Stromquelle 3.5 umfasst. Die Synchronisationspulsamplitude Max wird durch die Bewertung der Busspannung U_{Bus} ermittelt. Zur Bewertung der Busspannung U_{Bus} werden eine Entscheidungsschwelle U_{reg} und ein Zeitfenster Δt_{reg} definiert. Die mindestens eine digitale Ansteuerschaltung 32, 42 erkennt eine zu hohe Synchronisationspulsamplitude Max1, wenn der Synchronisationspuls P_{sync} die Entscheidungsschwelle U_{reg} zu einem Zeitpunkt t_{reg1} erreicht, welcher vor dem Zeitfenster Δt_{reg} liegt. Dieser Zustand wird in Fig. 8 durch eine erste Kennlinie K1 repräsentiert. Die mindestens eine digitale Ansteuerschaltung 32, 42 erkennt eine zu niedrige Synchronisationspulsamplitude Max2, wenn der Synchronisationspuls P_{sync} die Entscheidungsschwelle U_{reg} während einer Periodendauer t_{sync} des Synchronisationspulses P_{sync} nicht erreicht. Dieser Zustand wird in Fig. 8 durch eine zweite Kennlinie K2 repräsentiert. Die mindestens eine digitale Ansteuerschaltung 32, 42 erkennt eine korrekte Synchronisationspulsamplitude Max, wenn der Synchronisationspuls P_{sync} die Entscheidungsschwelle U_{reg} zu einem Zeitpunkt t_{reg2} erreicht, welcher innerhalb des Zeitfensters Δt_{reg} liegt. Dieser Zustand wird in Fig. 8 durch eine dritte Kennlinie K3 repräsentiert. Die Entscheidungsschwelle U_{reg} kann beispielsweise von einem Komparator überwacht werden. Wird die Entscheidungsschwelle U_{reg} zu früh, d.h. vor dem Überwachungsfenster Δt_{reg}, überschritten, dann wurde ein zu hoher Synchronisationspuls P_{sync} erzeugt. Wird die Entscheidungsschwelle U_{reg} nie überschritten, dann wurde ein zu niedriger Synchronisationspuls P_{sync} erzeugt. Erst wenn die Entscheidungsschwelle U_{reg} im überwachten Zeitfenster Δt_{reg} überschritten wurde, liegt ein Synchronisationspuls P_{sync} mit einer korrekten Höhe vor. Prinzipiell lässt sich die Bewertung der Synchronisationspulsamplitude an einer beliebigen Stelle des Synchronisationspulses P_{sync} durchführen, beispielsweise auch entlang der ansteigenden oder abfallenden Flanke. Allerdings sind die geringsten Toleranzen und damit die zuverlässigste Regelung in der Umgebung des Maximums der Pulsspannung U_{sync} zu erwarten, da die Spannung hier den kleinsten Änderungen unterliegt.

Wie aus Fig. 9 ersichtlich ist, wird die Dauer des Synchronisationspulses t_{sync} konstant gehalten, während die auf dem mindestens einen Digital-Analog-Wandler 34, 44 basierende Stufenhöhe Sₕ des ausgegebenen Strompulses I_{sync} entsprechend der Information aus der Amplitudenbewertung skaliert werden kann. Die Stufenhöhe Sₕ wird aus der Multiplikation der minimal möglichen Stufenhöhe mit einem Skalierungsfaktor berechnet. Die minimale Stufenhöhe ergibt sich aus dem minimalen ausgebbaren Stromwert der Stromquelle 3.5 bzw. Stromsenke 3.6. Der Skalierungsfaktor wird bei einem zu niedrigen Synchronisationspuls P_{sync} vergrößert und bei einem zu hohen Synchronisationspuls P_{sync} verkleinert, bis die richtige Höhe erreicht wird und die Entscheidungsschwelle U_{reg} innerhalb des Zeitfensters Δt_{reg} überschritten wird.

Ausführungsformen des erfindungsgemäßen Verfahrens zum Erzeugen eines Synchronisationspulses P_{sync} zur Synchronisierung einer nachfolgenden Signalübertragung zwischen der Empfangsanordnung 3, 3' und mindestens einem Sensor 7 über einen Datenbus 5 in einem Fahrzeug erzeugen den Synchronisationspuls P_{sync} innerhalb von vorgegebenen Spezifikationsgrenzen Vo, Vu mit einer vorgegebenen Form und einem vorgegebenen zeitlichen Verhalten. Zu Beginn der Signalübertragung zwischen dem mindestens einen Sensor 7 und der Empfängeranordnung 3, 3' wird der Synchronisationspuls P_{sync} von der Empfängeranordnung 3, 3' an den mindestens einen Sensor 7 übertragen. Erfindungsgemäß wird der Synchronisationspuls P_{sync} im Wesentlichen als Sinusschwingung erzeugt.

## Patentansprüche

1. Empfangsanordnung (3, 3') für ein Steuergerät in einem Fahrzeug, wobei die Empfangsanordnung einen Spannungsgenerator (30, 30') zur Erzeugung eines Synchronisationspulses (P_{sync}) umfasst, welcher eine erste Spannungsquelle (3.1), eine Stromquelle (3.5) und eine Stromsenke (3.6) umfasst, wobei der Spannungsgenerator (30, 30') den Synchronisationspuls (P_{sync}) innerhalb von vorgegebenen Spezifikationsgrenzen (Vo, Vu) mit einer vorgegebenen Form und einem vorgegebenen zeitlichen Verhalten erzeugt, und wobei die Empfangsanordnung (3, 3') den Synchronisationspuls (P_{sync}) zur Synchronisierung einer nachfolgenden Signalübertragung zwischen der Empfangsanordnung (3, 3') und mindestens einem Sensor (7) über einen Datenbus (5) an den mindestens einen Sensor (7) ausgibt, wobei der Spannungsgenerator (30, 30') den Synchronisationspuls (P_{sync}) über die Stromquelle (3.5) und die Stromsenke (3.6) durch Aufladen und/oder Entladen einer an dem Datenbus (5) anliegenden Buslast im Wesentlichen als Sinusschwingung erzeugt, wobei
der Spannungsgenerator (30, 30') mindestens eine digitale Ansteuerschaltung (32, 42) und mindestens einen Digital-Analog-Wandler (34, 44) umfasst, welche einen im Wesentlichen sinusförmigen Referenzstrom erzeugen und zur Erzeugung des Synchronisationspuls (P_{sync}) an die Stromquelle (3.5) und die Stromsenke (3.6) ausgeben, wobei die mindestens eine digitale Ansteuerschaltung (32, 42) den Synchronisationspuls (P_{sync}) basierend auf einem Ruhestrom (t₀) auf dem Datenbus und der Buslast regelt, wobei eine Ruhestromregelung ein Maß für den Ruhestrom (I₀) und eine erreichte Synchronisationspulsamplitude (Max) ein Maß für die Buslast liefert, wobei die Synchronisationspulsamplitude (Max) durch eine Bewertung der Busspannung (U_{Bus}) ermittelbar ist.

2. Empfangsanordnung (3, 3') nach Anspruch 1, **dadurch gekennzeichnet, dass** die mindestens eine digitale Ansteuerschaltung (42) und der mindestens eine Digital-Analog-Wandler (44) einen im Wesentlichen sinusförmigen Referenzstrom erzeugen und an die Stromquelle (3.5) ausgeben.

3. Empfangsanordnung (3, 3') nach Anspruch 1 oder 2, **dadurch gekennzeichnet, dass** eine zweite digitale Ansteuerschaltung (32) und ein zweiter Digital-Analog-Wandler (34) einen im Wesentlichen sinusförmigen Referenzstrom erzeugen und an die Stromsenke (3.6) ausgeben.

4. Empfangsanordnung (3, 3') nach Anspruch 1, **dadurch gekennzeichnet, dass** die mindestens eine digitale Ansteuerungsschaltung eine gemeinsame digitale Ansteuerschaltung (32) ist, wobei die gemeinsame digitale Ansteuerschaltung und ein gemeinsamer Digital-Analog-Wandler (34) einen im Wesentlichen sinusförmigen Referenzstrom erzeugen und an die Stromquelle (3.5) und die Stromsenke (3.6) ausgeben.

5. Empfangsanordnung (3, 3') nach einem der Ansprüche 1 bis 4, **dadurch gekennzeichnet, dass** die Stromquelle (3.5) Stromwerte bereitstellt, welche größer oder gleich 0mA sind, wobei die Stromsenke (3.6) Stromwerte bereitstellt, welche kleiner als 0mA sind.

6. Empfangsanordnung (3, 3') nach einem der Ansprüche 1 bis 5, **dadurch gekennzeichnet, dass** die mindestens eine digitale Ansteuerschaltung (32, 42) die vorgegebene Form und das vorgegebene zeitliche Verhalten des Synchronisationspulses (P_{sync}) speichert und/oder berechnet, wobei die mindestens eine digitale Ansteuerschaltung (32, 42) entsprechende digitale Datenworte an den mindestens einen Digital-Analog-Wandler (34, 44) ausgibt.

7. Empfangsanordnung (3, 3') nach Anspruch 1, **dadurch gekennzeichnet, dass** zur Bewertung der Busspannung (U_{Bus}) eine Entscheidungsschwelle (U_{reg}) und ein Zeitfenster (Δt_{reg}) definiert sind, wobei die mindestens eine digitale Ansteuerschaltung (32, 42) eine zu hohe Synchronisationspulsamplitude (Max1) erkennt, wenn der Synchronisationspuls (P_{sync}) die Entscheidungsschwelle (U_{reg}) zu einem Zeitpunkt (t_{reg1}) erreicht, welcher vor dem Zeitfenster (Δt_{reg}) liegt, wobei die mindestens eine digitale Ansteuerschaltung (32, 42) eine zu niedrige Synchronisationspulsamplitude (Max2) erkennt, wenn der Synchronisationspuls (P_{sync}) die Entscheidungsschwelle (U_{reg}) während einer Periodendauer (t_{sync}) des Synchronisationspulses (P_{sync}) nicht erreicht, und wobei die mindestens eine digitale Ansteuerschaltung (32, 42) eine korrekte Synchronisationspulsamplitude (Max) erkennt, wenn der Synchronisationspuls (P_{sync}) die Entscheidungsschwelle (U_{reg}) zu einem Zeitpunkt (t_{reg2}) erreicht, welcher innerhalb des Zeitfensters (Δt_{reg}) liegt.

8. Verfahren zum Erzeugen eines Synchronisationspulses zur Synchronisierung einer nachfolgenden Signalübertragung zwischen einer Empfangsanordnung (3, 3') und mindestens einem Sensor (7) über einen Datenbus (5) in einem Fahrzeug, wobei der Synchronisationspuls (P_{sync}) innerhalb von vorgegebenen Spezifikationsgrenzen (Vo, Vu) mit einer vorgegebenen Form und einem vorgegebenen zeitlichen Verhalten erzeugt und von der Empfängeranordnung (3) an den mindestens einen Sensor (7) übertragen wird, wobei der Synchronisationspuls (P_{sync}) im Wesentlichen als Sinusschwingung erzeugt wird, wobei zur Erzeugung des Synchronisationspuls (P_{sync}) eine Buslast des Datenbus (5) aufgeladen und entladen wird, wobei die Aufladung und Entladung mittels einer Stromquelle (3.5) und einer Stromsenke (3.6) erfolgt, an welche ein im Wesentlichen sinusförmigen Referenzstrom ausgegeben wird, wobei
im Wesentlichen sinusförmige Referenzstrom mittels einer digitalen Ansteuerschaltung (32, 42) und mindestens einem Digital-Analog-Wandler (34, 44) erzeugt wird und zur Erzeugung des Synchronisationspuls (P_{sync}) an die Stromquelle (3.5) und die Stromsenke (3.6) ausgegeben wird, wobei der Synchronisationspuls (P_{sync}) basierend auf einem Ruhestrom (I₀) auf dem Datenbus und der Buslast geregelt wird, wobei ein Maß für den Ruhestrom (I₀) von eine Ruhestromregelung und ein Maß für die Buslast von einer erreichten Synchronisationspulsamplitude (Max) geliefert wird, wobei die Synchronisationspulsamplitude (Max) durch eine Bewertung der Busspannung (U_{Bus}) ermittelt wird.

## Claims

1. Reception arrangement (3, 3') for a controller in a vehicle, wherein the reception arrangement comprises a voltage generator (30, 30') for generating a synchronization pulse (P_{sync}), which comprises a first voltage source (3.1), a current source (3.5) and a current sink (3.6), wherein the voltage generator (30, 30') generates the synchronization pulse (P_{sync}) within predefined specification limits (Vo, Vu) with a predefined shape and a predefined temporal behaviour, and wherein the reception arrangement (3, 3') outputs the synchronization pulse (P_{sync}) for synchronizing a subsequent signal transmission between the reception arrangement (3, 3') and at least one sensor (7) to the at least one sensor (7) via a data bus (5), wherein the voltage generator (30, 30') generates the synchronization pulse (P_{sync}) substantially as a sinusoidal oscillation using the current source (3.5) and the current sink (3.6) by charging and/or discharging a bus load present on the data bus (5), wherein the voltage generator (30, 30') comprises at least one digital drive circuit (32, 42) and at least one digital-to-analogue converter (34, 44) that generate a substantially sinusoidal reference current and output it to the current source (3.5) and the current sink (3.6) in order to generate the synchronization pulse (P_{sync}), wherein the at least one digital drive circuit (32, 42) regulates the synchronization pulse (P_{sync}) based on a quiescent current (I₀) on the data bus and the bus load, wherein quiescent current regulation provides a measure of the quiescent current (I₀) and a reached synchronization pulse amplitude (Max) provides a measure of the bus load, wherein the synchronization pulse amplitude (Max) is able to be determined by assessing the bus voltage (U_{Bus}).

2. Reception arrangement (3, 3') according to Claim 1, **characterized in that** the at least one digital drive circuit (42) and the at least one digital-to-analogue converter (44) generate a substantially sinusoidal reference current and output it to the current source (3.5) .

3. Reception arrangement (3, 3') according to Claim 1 or 2, **characterized in that** a second digital drive circuit (32) and a second digital-to-analogue converter (34) generate a substantially sinusoidal reference current and output it to the current sink (3.6).

4. Reception arrangement (3, 3') according to Claim 1, **characterized in that** the at least one digital drive circuit is a common digital drive circuit (32), wherein the common digital drive circuit and a common digital-to-analogue converter (34) generate a substantially sinusoidal reference current and output it to the current source (3.5) and the current sink (3.6).

5. Reception arrangement (3, 3') according to one of Claims 1 to 4, **characterized in that** the current source (3.5) provides current values that are greater than or equal to 0 mA, wherein the current sink (3.6) provides current values that are less than 0 mA.

6. Reception arrangement (3, 3') according to one of Claims 1 to 5, **characterized in that** the at least one digital drive circuit (32, 42) stores and/or calculates the predefined shape and the predefined temporal behaviour of the synchronization pulse (P_{sync}), wherein the at least one digital drive circuit (32, 42) outputs corresponding digital data words to the at least one digital-to-analogue converter (34, 44).

7. Reception arrangement (3, 3') according to Claim 1, **characterized in that** a decision threshold (U_{reg}) and a time window (Δt_{reg}) are defined for the assessment of the bus voltage (U_{Bus}), wherein the at least one digital drive circuit (32, 42) identifies an excessively high synchronization pulse amplitude (Max1) when the synchronization pulse (P_{sync}) reaches the decision threshold (U_{reg}) at a time (t_{reg1}) that is before the time window (Δt_{reg}), wherein the at least one digital drive circuit (32, 42) identifies an excessively low synchronization pulse amplitude (Max2) when the synchronization pulse (P_{sync}) does not reach the decision threshold (U_{reg}) during a period duration (t_{sync}) of the synchronization pulse (P_{sync}), and wherein the at least one digital drive circuit (32, 42) identifies a correct synchronization pulse amplitude (Max) when the synchronization pulse (P_{sync}) reaches the decision threshold (U_{reg}) at a time (t_{reg2}) that is within the time window (Δt_{reg}).

8. Method for generating a synchronization pulse for synchronizing a subsequent signal transmission between a reception arrangement (3, 3') and at least one sensor (7) via a data bus (5) in a vehicle, wherein the synchronization pulse (P_{sync}) is generated within predefined specification limits (Vo, Vu) with a predefined shape and a predefined temporal behaviour and is transmitted by the reception arrangement (3) to the at least one sensor (7), wherein the synchronization pulse (P_{sync}) is generated substantially as a sinusoidal oscillation, wherein a bus load of the data bus (5) is charged and discharged in order to generate the synchronization pulse (P_{sync}), wherein the charging and discharging takes place by way of a current source (3.5) and a current sink (3.6) to which a substantially sinusoidal reference current is output, wherein the substantially sinusoidal reference current is generated by way of a digital drive circuit (32, 42) and at least one digital-to-analogue converter (34, 44) and is output to the current source (3.5) and the current sink (3.6) in order to generate the synchronization pulse (P_{sync}), wherein the synchronization pulse (P_{sync}) is regulated based on a quiescent current (I₀) on the data bus and the bus load, wherein a measure of the quiescent current (I₀) is provided by quiescent current regulation and a measure of the bus load is provided by a reached synchronization pulse amplitude (Max), wherein the synchronization pulse amplitude (Max) is determined by assessing the bus voltage (U_{Bus}).

## Revendications

1. Dispositif de réception (3, 3') destiné à un appareil de commande situé dans un véhicule, le dispositif de réception comprenant un générateur de tension (30, 30') destiné à générer une impulsion de synchronisation (P_{sync}) qui comprend une première source de tension (3.1), une source de courant (3.5) et un collecteur de courant (3.6), le générateur de tension (30, 30') générant l'impulsion de synchronisation (P_{sync}) dans des limites de spécification prédéterminées (Vo, Vu) avec une forme prédéterminée et un comportement dans le temps prédéterminé, et le dispositif de réception (3, 3') émettant l'impulsion de synchronisation (P_{sync}) vers l'au moins un capteur (7) pour synchroniser une transmission de signal ultérieure entre le dispositif de réception (3, 3') et au moins un capteur (7) par le biais d'un bus de données (5), le générateur de tension (30, 30') générant l'impulsion de synchronisation (P_{sync}) sous la forme d'une oscillation sinusoïdale par le biais de la source de courant (3.5) et du collecteur de courant (3.6) en connectant et/ou déconnectant une charge de bus appliquée au niveau du bus de données (5) sensiblement, le générateur de tension (30, 30') comprenant au moins un circuit de commande numérique (32, 42) et au moins un convertisseur numérique-analogique (34, 44), qui génèrent un courant de référence sensiblement sinusoïdal et le délivrent à la source de courant de sortie (3.5) et au collecteur de courant (3.6) pour générer l'impulsion de synchronisation (P_{sync}), l'au moins un circuit de commande numérique (32, 42) régulant l'impulsion de synchronisation (P_{sync}) sur la base d'un courant de repos (I₀) sur le bus de données et la charge de bus, une régulation de courant de repos fournissant une mesure du courant de repos (I₀) et une amplitude d'impulsion de synchronisation obtenue (Max) fournissant une mesure de la charge du bus, l'amplitude d'impulsion de synchronisation (Max) pouvant être déterminée par évaluation de la tension de bus (U_{Bus}).

2. Dispositif de réception (3, 3') selon la revendication 1, **caractérisé en ce que** l'au moins un circuit de commande numérique (42) et l'au moins un convertisseur numérique-analogique (44) génèrent un courant de référence sensiblement sinusoïdal et le délivrent à la source de courant (3.5).

3. Dispositif de réception (3, 3') selon la revendication 1 ou 2, **caractérisé en ce qu'**un deuxième circuit de commande numérique (32) et un deuxième convertisseur numérique-analogique (34) génèrent un courant de référence sensiblement sinusoïdal et le délivrent au collecteur de courant (3.6).

4. Dispositif de réception (3, 3') selon la revendication 1, **caractérisé en ce que** l'au moins un circuit de commande numérique est un circuit de commande numérique commun (32), le circuit de commande numérique commun et un convertisseur numérique-analogique commun (34) générant un courant de référence sensiblement sinusoïdal et le délivrant à la source de courant (3.5) et au collecteur de courant (3.6).

5. Dispositif de réception (3, 3') selon l'une des revendications 1 à 4, **caractérisé en ce que** la source de courant (3.5) fournit des valeurs de courant qui sont supérieures ou égales à 0 mA, le collecteur de courant (3.6) fournissant des valeurs de courant inférieures à 0 mA.

6. Dispositif de réception (3, 3') selon l'une des revendications 1 à 5, **caractérisé en ce que** l'au moins un circuit de commande numérique (32, 42) mémorise et/ou calcule la forme prédéterminée et le comportement dans le temps prédéterminé de l'impulsion de synchronisation (P_{sync}), l'au moins un circuit de commande numérique (32, 42) délivrant des mots de données numériques correspondants à l'au moins un convertisseur numérique-analogique (34, 44).

7. Dispositif de réception (3, 3') selon la revendication 1, **caractérisé en ce qu'**un seuil de décision (U_{reg}) et une fenêtre temporelle (Δt_{reg}) sont définis pour évaluer la tension de bus (U_{Bus}), l'au moins un circuit de commande numérique (32, 42) détectant une amplitude d'impulsion de synchronisation trop élevée (Max1) lorsque l'impulsion de synchronisation (P_{sync}) atteint le seuil de décision (U_{reg}) à un instant (t_{reg1}) qui est situé avant la fenêtre temporelle (Δt_{reg}), l'au moins un circuit de commande numérique (32, 42) détectant une amplitude d'impulsion de synchronisation (Max2) trop faible lorsque l'impulsion de synchronisation (P_{sync}) n'atteint pas le seuil de décision (U_{reg}) pendant une durée (t_{sync}) de l'impulsion de synchronisation (P_{sync}), et l'au moins un circuit de commande numérique (32, 42) détectant une amplitude d'impulsion de synchronisation correcte (Max) lorsque l'impulsion de synchronisation (P_{sync}) atteint le seuil de décision (U_{reg}) à un instant (t_{reg2}) qui est dans la fenêtre temporelle (Δt_{reg}).

8. Procédé de génération d'une impulsion de synchronisation destinée à synchroniser une transmission de signal ultérieure entre un dispositif de réception (3, 3') et au moins un capteur (7) par le biais d'un bus de données (5) dans un véhicule, l'impulsion de synchronisation (P_{sync}) étant générée dans des limites de spécification prédéterminées (Vo, Vu) avec une forme prédéterminée et un comportement dans le temps prédéterminé et étant transmise du dispositif de réception (3) à l'au moins un capteur (7), l'impulsion de synchronisation (P_{sync}) étant générée sensiblement sous la forme d'une oscillation sinusoïdale, une charge du bus de données (5) étant connectée et déconnectée pour générer l'impulsion de synchronisation (P_{sync}), la connexion et déconnexion de la charge étant effectuée au moyen d'une source de courant (3.5) et d'un collecteur de courant (3.6) auxquels un courant de référence sensiblement sinusoïdal est délivré, un courant de référence sensiblement sinusoïdal étant généré au moyen d'un circuit de commande numérique (32, 42) et d'au moins un convertisseur numérique-analogique (34, 44) et étant délivré à la source de courant (3.5) et au collecteur de courant (3.6) pour générer l'impulsion de synchronisation (P_{sync}), l'impulsion de synchronisation (P_{sync}) étant régulée sur la base d'un courant de repos (I₀) sur le bus de données et la charge de bus, une mesure du courant de repos (I₀) étant fournie par une régulation de courant de repos et une mesure de la charge de bus étant fournie par une amplitude d'impulsion de synchronisation obtenue (Max), l'amplitude d'impulsion de synchronisation (Max) étant déterminée par évaluation de la tension de bus (U_{Bus}).
